# FASCICULE DE BREVET EUROPEEN

(11) **EP 3 167 106 B1**
(45) Date de publication et mention de la délivrance du brevet: **09.01.2019**
(21) Numéro de dépôt: 15756244.8
(22) Date de dépôt: 07.07.2015
(51) Int. Cl.: D04H 1/46, B32B 5/26, B29C 70/08

(54) **ARMATURE TEXTILE DE RENFORCEMENT ET SON PROCEDE DE REALISATION**
TEXTILER VERSTÄRKUNGSRAHMEN UND VORRICHTUNG ZU DESSEN HERSTELLUNG
TEXTILE REINFORCEMENT FRAMEWORK AND MEANS FOR THE PRODUCTION THEREOF

(30) Priorité: 08.07.2014 FR 1456591
(43) Date de publication de la demande: 17.05.2017
(73) Titulaire: Chomarat, Gilbert, 1223 Cologny (CH)
(72) Inventeur: Chomarat, Gilbert, 1223 Cologny (CH)
(74) Mandataire: Cabinet Poncet
(86) Numéro de dépôt international: PCT/IB2015/055140
(87) Numéro de publication internationale: WO 2016/005908

(56) Documents cités:
- EP-A1- 0 659 922
- EP-B1- 2 145 036
- WO-A1-2011/021133
- FR-A1- 2 877 955

## Description

### DOMAINE TECHNIQUE DE L'INVENTION

La présente invention concerne les armatures textiles utilisées comme produits de renforcement d'articles composites, c'est-à-dire d'articles à base de résine (polyester ou autre) armée d'une armature textile de renforcement.

Des armatures textiles de renforcement sont connues du document EP 0 395 548 qui décrit l'utilisation de deux couches de renfort textiles disposées de part et d'autre d'une couche centrale constituée par une nappe à base de fibres à ondulations permanentes. Les couches de renfort textiles et la couche centrale sont liées par couture/tricotage.

Le document EP 0 694 643 décrit quant à lui une armature textile utilisée pour la réalisation d'articles composites, constituée par au moins deux couches de renfort textiles proprement dites en fibres de verre, disposées de part et d'autre d'une couche centrale en fibres de polyester donnant l'épaisseur dudit matériau, lesdites couches étant liées entre elles par couture/tricotage, dans laquelle on prévoit, au moins contre l'une de ses faces externes, un voile en fibres de polyester, la liaison dudit voile étant réalisée soit par collage à l'extérieur du complexe, soit par l'intermédiaire des coutures liant les différentes couches entre elles.

Les techniques de couture/tricotage sont relativement lentes et conduisent à des cadences de fabrication lentes, de l'ordre de 3 à 5 mètres par minute, et qu'il est difficile d'accélérer.

Les armatures textiles de ces documents présentent en outre des capacités de déformation non uniformes selon leur surface, en raison de l'utilisation de moyens de solidarisation des différentes couches textiles entre elles par couture/tricotage.

Et la présence de lignes de couture/tricotage induit des défauts d'aspect en surface de la pièce finie obtenue après imprégnation de l'armature textile par de la résine.

Du document EP 0 659 922, on connaît l'utilisation de deux nappes de renfort textiles en fibres de verre disposées respectivement de part et d'autre d'une couche centrale constituée par une nappe à base de fibres de polypropylène à ondulations permanentes, avec, sur au moins une des nappes de renfort textiles, un voile fibreux à base de fibres de polyester à frisure permanente et de titre inférieur à celui des fibres de la couche centrale. Le ou les voiles fibreux, les couches de renfort textiles et la couche centrale sont liés entre eux par aiguilletage.

La technique d'aiguilletage fort, nécessaire pour assurer par elle-même une cohésion suffisante, rend le produit trop rigide et inadapté pour se déformer et suivre suffisamment les formes courbes de certains moules lors de l'utilisation ultérieure du produit.

Du document EP 2 145 036, on connaît une armature textile utilisable pour la réalisation de matériaux ou pièces composites, comprenant :
- une couche centrale à base de tronçons de fibres en un premier matériau synthétique tel que polypropylène, polyester ou polyamide, ayant reçu préalablement à leur mise sous forme de couche un traitement leur communiquant une frisure permanente,
- des couches externes disposées de part et d'autre de la couche centrale,
dans laquelle :
- les couches externes comportent des tronçons de fibres chimiques ayant reçu préalablement un traitement leur communiquant une frisure permanente, et des tronçons de fibres de renfort,
- certains au moins des tronçons de fibres chimiques pénètrent selon une partie de leur longueur dans la couche centrale,
- les tronçons de fibres chimiques des couches externes comportent environ 30 % en poids de premiers tronçons de fibres chimiques ayant au moins une couche superficielle en un matériau thermofusible dont la température de fusion est inférieure à celle du premier matériau synthétique,
- les premiers tronçons de fibres chimiques des couches externes adhèrent au moins partiellement entre eux et aux autres tronçons de fibres de l'armature textile.

L'adhérence des fibres chimiques des couches externes avec les fibres de la couche centrale d'armature textile qu'elles pénètrent assure une liaison efficace des couches d'armature entre elles, garantissant la cohésion de l'armature textile sans nécessiter l'utilisation des techniques de couture/tricotage qui conduisent à des cadences de fabrication lentes et à la présence de défauts d'aspect en surface de la pièce finie obtenue après imprégnation de l'armature textile par de la résine, et sans nécessiter un aiguilletage fort. Les armatures textiles de ce document présentent en outre des capacités de déformation uniformes selon leur surface.

Toutefois, les armatures textiles de ce document, dont la cohésion est assurée par thermocollage, nécessitent d'utiliser une quantité importante de matériau thermofusible dans les couches externes pour assurer une cohésion suffisante, cette quantité étant de l'ordre de 30% en poids. Il en résulte que les armatures présentent une capacité de déformation ne permettant pas des faibles rayons de courbure, ce qui est inadapté pour une utilisation dans les applications de préformage où l'armature doit épouser une forme de moule à fortes courbures.

### EXPOSE DE L'INVENTION

Un premier problème proposé par l'invention est de fournir une armature textile à cohésion satisfaisante, peu onéreuse car rapide à fabriquer, et qui présente de meilleures capacités de déformation multidirectionnelle lors de son utilisation pour la réalisation de matériaux ou pièces composites.

Simultanément, la présente invention cherche à fournir une armature textile qui puisse être imprégnée par de la résine de façon aisée et homogène lors de l'utilisation de techniques de moulage à la presse, de moulage par injection basse pression (RTM), ou de moulage par infusion.

L'invention vise également à produire de façon économique des armatures textiles utilisables, selon les modes de réalisation, soit à l'état souple pour un procédé de moulage par injection basse pression (RTM) ou par infusion, soit à l'état préformé pour un procédé de moulage par injection.

Pour atteindre ces buts, ainsi que d'autres, l'invention propose une armature textile utilisable pour la réalisation de matériaux ou pièces composites, comprenant :
- une couche centrale à base de tronçons de fibres frisés en un premier type de matériau synthétique, ayant une frisure permanente,
- des couches externes disposées de part et d'autre de la couche centrale,
dans laquelle :
- les couches externes comportent des premiers tronçons de fibres chimiques ayant une frisure permanente, et des tronçons de fibres de renfort,
- certains au moins des premiers tronçons de fibres chimiques des couches externes, répartis selon toute la surface des couches externes, comportent des parties de tronçon pénétrantes qui pénètrent dans la couche centrale,
- dans les couches externes, plus de 80% en poids des premiers tronçons de fibres chimiques ont une frisure permanente et sont constitués d'un second matériau synthétique,
- la couche centrale comprend en outre des éléments de liaison basse température comportant au moins une couche superficielle en un matériau thermofusible ayant une température de fusion inférieure à celle des tronçons de fibres de renfort, à celle du second matériau synthétique des premiers tronçons de fibres chimiques, et à celle du premier type de matériau synthétique des tronçons de fibres frisés,
- les premiers tronçons de fibres chimiques en second matériau synthétique n'adhèrent pas entre eux dans les couches externes,
- les parties de tronçon pénétrantes des premiers tronçons de fibres chimiques qui pénètrent dans la couche centrale sont retenues dans ladite couche centrale et assurent ainsi la cohésion entre les couches de l'armature textile.

Une telle armature textile présente à la fois une bonne cohésion autorisant sa manipulation sans désagrégation ou délaminage, et de bonnes capacités de déformation selon plusieurs directions. Ainsi, une telle armature ne comporte aucune direction de déformation privilégiée, ni aucune direction selon laquelle une déformation est empêchée. L'armature textile selon l'invention comporte une cohérence homogène selon toutes les directions entre ses différentes couches textiles. Mais plus particulièrement, l'armature textile selon l'invention présente une bien meilleure capacité de déformation que les armatures selon le brevet antérieur EP 2 145 036 du demandeur, ce qui facilite les applications de préformage.

Simultanément, grâce à la quasi absence d'adhésion des premiers tronçons de fibres chimiques dans les couches externes, l'armature conserve une bonne flexibilité, soit pour une réalisation de préforme, soit pour une application au moulage par injection basse pression (RTM) ou par infusion.

Selon l'invention, les parties de tronçon pénétrantes des premiers tronçons de fibres chimiques peuvent être retenues de deux façons dans la couche centrale pour assurer la cohésion entre les couches de l'armature textile.

Selon une première possibilité, on peut prévoir que les parties de tronçon pénétrantes sont en nombre suffisant pour assurer une cohésion satisfaisante, résultant d'un aiguilletage dense double face de l'armature. L'aiguilletage conserve alors les propriétés de souplesse de l'armature textile et permet d'éviter le chauffage de l'armature pour assurer la cohésion entre les couches de l'armature textile. La présence des éléments de liaison basse température permet le thermoformage ultérieur de l'armature, et ce thermoformage est facilité par le fait que la souplesse de l'armature est optimale. En outre, la préforme ainsi réalisée par un thermoformage de l'armature au cours duquel seuls lesdits éléments de liaison basse température sont fondus conserve toutes les propriétés avantageuses de pénétration de résine dans les couches externes, pour le moulage ultérieur de la préforme.

Selon une seconde possibilité, on réduit le nombre de parties de tronçon pénétrantes, par un aiguilletage réduit, et on chauffe l'armature pour assurer le collage des parties de tronçon pénétrantes aux éléments de liaison basse température de la couche centrale.

Du fait que les parties de tronçon pénétrantes des premiers tronçons de fibres chimiques qui pénètrent dans la couche centrale adhèrent par collage aux éléments basse température de la couche centrale, il est possible d'assurer une liaison suffisante des couches d'armature entre elles au moyen d'un nombre relativement réduit de telles parties de tronçon pénétrantes des premiers tronçons de fibres chimiques qui pénètrent dans la couche centrale. La pénétration d'un nombre relativement réduit de fibres chimiques peut alors être réalisée par une technique d'aiguilletage moins dense.

Dans cette seconde possibilité à thermocollage, l'absence éventuelle d'éléments de liaison basse température dans les couches externes présente deux avantages essentiels.

Selon le premier avantage, elle garantit à l'ensemble de l'armature, malgré la présence des éléments de liaison basse température dans la couche centrale, une capacité de déformation très supérieure à celle de l'armature du document EP 2 145 036 où les fibres chimiques basse température des couches externes, en grande quantité, s'agglomèrent et forment deux couches parallèles relativement rigides qui constituent ensemble une structure à grande inertie mécanique et tendent ainsi à rigidifier l'armature tout entière.

Selon le second avantage, les couches externes de l'armature conservent leurs propriétés avantageuses de pénétration de la résine lors d'un moulage ultérieur de la préforme par moulage à la presse, par injection basse pression (RTM) ou par infusion.

Les éléments de liaison basse température permettent aussi le thermoformage ultérieur de l'armature, tandis que l'aiguilletage réduit permet d'augmenter la cadence de production.

On notera que les deux possibilités de retenue peuvent être utilisées de façon alternative, mais qu'elles peuvent aussi être combinées, par exemple au résultat d'un aiguilletage moyen et d'un chauffage léger assurant un collage partiel des parties de tronçon pénétrantes aux éléments de liaison.

Les fibres de renfort peuvent être des fibres de verre ou des fibres végétales (chanvre, sisal, lin...).

La frisure permanente des tronçons de fibres de la couche centrale favorise une déformation aisée de l'armature textile lors de son utilisation dans des techniques de moulage. En outre, la frisure permanente des tronçons de fibres de la couche centrale permet de préserver des espaces libres entre les tronçons de fibres, conférant ainsi à l'armature un caractère aéré, ce qui favorise le fluage de la résine lors de l'utilisation de techniques de moulage à la presse, de moulage par injection ou de moulage sous vide.

De préférence, les tronçons de fibres frisés en premier matériau synthétique dans la couche centrale peuvent être des tronçons de fibres frisés monobrins en polypropylène, en polyester ou en polyamide. Ces fibres sont très répandues dans l'industrie textile, de coût peu élevé, facilement filables, et aisées à mettre en forme pour la réalisation de tronçons de fibres à frisure permanente élastique.

Pour une plus grande régularité de la couche centrale, on peut prévoir que les tronçons de fibres frisés en premier matériau synthétique dans la couche centrale présentent au moins deux titres unitaires différents.

Avantageusement, les premiers tronçons de fibres chimiques présents dans les couches externes ont une section transversale de diamètre inférieur à celui des tronçons de fibres de renfort. Cette différence de diamètres permet de favoriser l'entraînement et la pénétration de certains au moins des premiers tronçons des fibres chimiques des couches externes selon une partie au moins de leur longueur dans la couche centrale par un procédé d'aiguilletage. Lors de l'aiguilletage, les aiguilles choisies pour entraîner les premiers tronçons de fibres chimiques ont une faible section transversale, de sorte qu'elles n'entraînent pas ou peu les tronçons de fibres de renfort. On évite ainsi de briser les fragiles tronçons de fibres de renfort qui arment l'armature textile, surtout dans le cas de fibres de renfort en verre.

Avantageusement, les éléments de liaison basse température de la couche centrale peuvent être des tronçons de fibres en une matière thermofusible à température de fusion inférieure à celle du second matériau synthétique des premiers tronçons de fibres chimiques des couches externes et à celle du premier matériau synthétique des tronçons de fibres frisés, par exemple en copolyéthylène ou en copolyamide.

Selon une réalisation avantageuse de l'invention, on peut prévoir que :
- les éléments de liaison basse température de la couche centrale peuvent être des tronçons de fibres bi-composant, ayant une âme centrale en un premier composant et une gaine externe en un second composant,
- la température de fusion du premier composant de l'âme centrale est supérieure à celle du second composant de la gaine externe,
- la température de fusion du second composant de la gaine externe est inférieure à celle des premiers tronçons de fibres chimiques des couches externes et à celle du premier matériau synthétique des tronçons de fibres frisés.

L'utilisation de telles fibres bi-composant permet la réalisation d'un liage thermique ou d'une préforme sans risquer une dégradation notoire ou accidentelle de la couche centrale par un excès de fusion : seule la gaine externe des fibres bi-composant sera amenée à se ramollir et à participer au liage thermique, leur âme restant inaltérée et conservant ses propriétés mécaniques.

On peut avantageusement réaliser les couches externes sous forme stratifiée, comprenant une strate externe essentiellement en premiers tronçons de fibres chimiques, avec ou sans une strate interne essentiellement en premiers tronçons de fibres chimiques, et une strate intermédiaire essentiellement en fibres de renfort.

La liaison entre les strates est assurée par l'aiguilletage, éventuellement associé au ramollissement superficiel des éléments de liaison basse température, certaines fibres chimiques de la strate externe traversant les strates intermédiaire et interne de la couche externe pour pénétrer dans la couche centrale de l'armature textile pour venir adhérer aux éléments de liaison basse température.

On notera la possibilité de supprimer la strate interne en fibres chimiques.

Par exemple, les premiers tronçons de fibres chimiques sont en polyamide ou polyester ou polypropylène.

Les éléments de liaison basse température, selon d'autres modes de réalisation, peuvent prendre d'autres formes telles que poudre, voile, grille ou filet, en fibres basse température, entourés de fibres frisées.

Selon une première possibilité, dans les couches externes, les tronçons de fibres chimiques comprennent 100% en poids de fibres à frisure permanente en second matériau synthétique.

Selon un mode de réalisation avantageux, on peut prévoir que, dans les couches externes, les tronçons de fibres chimiques comprennent 8 à 10% en poids de fibres en matériau thermofusible basse température. L'intérêt est alors une augmentation sensible de la cohésion des couches d'armature entre elles, obtenues avec seulement une faible proportion de fibres en matériau thermofusible basse température, ce qui ne nuit pas à la flexibilité de l'armature.

Un autre intérêt est une augmentation des capacités de thermoformage de l'armature.

Selon un autre aspect, l'invention propose un procédé de fabrication d'une armature textile utilisable pour la réalisation de matériaux ou pièces composites, comportant les étapes successives suivantes :
a) prévoir une couche centrale contenant, en mélange, des tronçons de fibres frisés monobrins en un premier matériau synthétique ayant reçu préalablement à leur mise sous forme de couche un traitement leur communiquant une frisure permanente, et des éléments de liaison basse température comportant au moins une couche superficielle en un matériau thermofusible ayant une température de fusion inférieure à celle du premier matériau synthétique,
b) disposer, de part et d'autre de la couche centrale, une couche externe comportant des tronçons de fibres de renfort, et des premiers tronçons de fibres chimiques dont plus de 80 % en poids ont une frisure permanente et une température de fusion supérieure à celle des éléments de liaison basse température de la couche centrale,
c) effectuer un aiguilletage pour faire pénétrer, selon une partie pénétrante de leur longueur, des premiers tronçons de fibres chimiques dans la couche centrale.

Selon un premier mode de réalisation, l'aiguilletage est choisi suffisant pour que les parties pénétrantes des premiers tronçons de fibres chimiques assurent, par frottement, une cohésion satisfaisante des couches centrale et externes de l'armature textile.

En alternative ou en complément, avec un aiguilletage éventuellement réduit, on peut prévoir une étape ultérieure :
d) chauffer l'armature textile pour ramollir au moins superficiellement et rendre adhérents les éléments de liaison basse température de la couche centrale et les faire adhérer aux parties pénétrantes des premiers tronçons de fibres chimiques.

Un tel procédé de fabrication est facile à réaliser avec des moyens techniques (machines, outillage, ...) connus et très répandus dans l'industrie textile. Le procédé est ainsi peu onéreux.

L'utilisation d'un liage thermique permet également une cadence de production plus élevée que celle lors de l'utilisation d'un liage par aiguilletage seul.

De préférence, au cours de l'étape d), le chauffage peut être réalisé par circulation d'air chaud à travers l'armature textile. Un tel mode de chauffage permet un liage thermique des fibres entre elles jusqu'au coeur de l'armature textile, et évite un échauffement intensif des faces inférieure et supérieure de l'armature textile sur lesquelles sont disposées les couches externes comportant des premiers tronçons de fibres chimiques. On évite ainsi la fusion des tronçons de fibres chimiques des couches externes et la formation d'une couche continue de matière après refroidissement, couche continue qui nuirait à une bonne imprégnation de l'armature textile par la résine lors de son utilisation dans des techniques de moulage à la presse, de moulage par injection ou de moulage sous vide.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue schématique en coupe longitudinale d'une armature textile selon un premier mode de réalisation de l'invention, au cours de sa fabrication ;
- la figure 2 est une vue schématique en coupe longitudinale de l'armature textile de la figure 1 lors d'une opération de pré-aiguilletage ;
- la figure 3 est une vue schématique en coupe longitudinale de l'armature textile de la figure 2 lors d'une opération de chauffage ;
- la figure 4 illustre, en perspective, un tronçon de fibres chimiques selon une structure bi-composant ;
- la figure 5 est une vue schématique en coupe longitudinale d'une armature textile selon un second mode de réalisation de l'invention ; et
- la figure 6 illustre schématiquement un procédé et un dispositif pour la fabrication d'une armature textile selon un mode de réalisation de l'invention.

### DESCRIPTION DES MODES DE REALISATION PREFERES

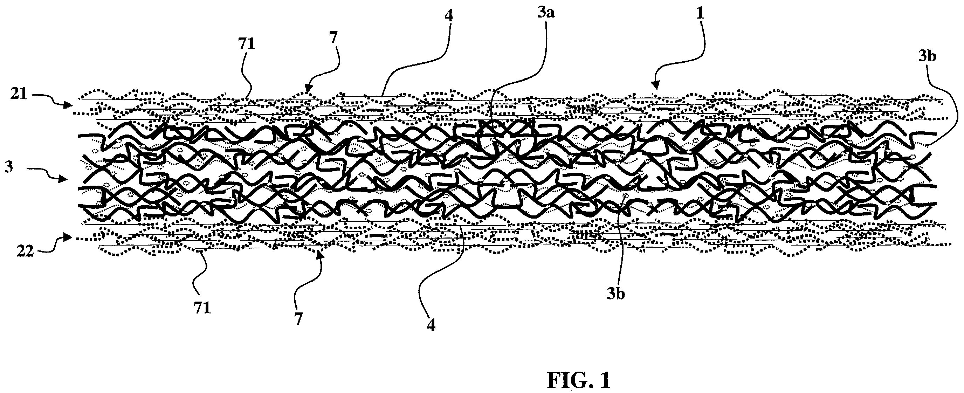

Dans un premier mode de réalisation illustré sur la figure 1, une armature textile 1 selon l'invention comporte trois couches textiles 21, 3 et 22 successives. La couche centrale 3 est à base d'un mélange de tronçons de fibres frisés 3a en un premier matériau synthétique et d'éléments de liaison basse température tels que des tronçons de fibres chimiques basse température 3b comportant au moins une couche superficielle en un matériau thermofusible ayant une température de fusion basse.

Les tronçons de fibres frisés 3a ont reçu préalablement à leur mise sous forme de couche un traitement leur communiquant une frisure permanente.

Pour garantir une meilleure durabilité du caractère élastique des tronçons de fibres 3a frisés, ceux-ci peuvent avantageusement être des tronçons de fibres monobrins.

Les tronçons de fibres frisés 3a peuvent présenter le même titre unitaire. On peut néanmoins prévoir que les tronçons de fibres frisés 3a présentent au moins deux titres unitaires différents, pour une plus grande régularité de la couche centrale 3. La couche centrale 3 peut ainsi comporter des tronçons de fibres frisés 3a de 110 dTex et des tronçons de fibres frisés 3a de 60 dTex par exemple.

Le poids au mètre carré de la couche centrale 3 peut varier en fonction du grammage final de l'armature textile 1. En pratique ce poids au mètre carré peut varier de 110g/m² à 200g/m², ces limites n'étant toutefois pas strictes.

De part et d'autre de la couche centrale 3 sont disposées des couches textiles externes 21 et 22. Les couches textiles externes 21 et 22 sont, dans ce mode de réalisation, des couches à base de tronçons de fibres de renfort 4 et de premiers tronçons de fibres chimiques 7.

Les premiers tronçons de fibres chimiques 7 ont reçu préalablement un traitement leur communiquant une frisure permanente.

Les couches textiles externes 21 et 22 peuvent être obtenues à partir d'un mélange homogène de premiers tronçons de fibres chimiques 7 et de tronçons de fibres de renfort 4 telles que des fibres de verre ou des fibres végétales. Un tel mélange homogène peut être obtenu au moyen d'un coupeur approprié, et sera ensuite déposé par gravité sur les deux faces de la couche centrale 3.

L'homogénéité du mélange est également obtenue grâce à la frisure permanente des premiers tronçons de fibres chimiques 7, qui donne une "accroche" au mélange et évite un phénomène de "décantation" dû aux densités relatives ou sections différentes des tronçons de fibres de renfort 4 et des premiers tronçons de fibres chimiques 7.

De bons résultats ont été obtenus avec des couches externes 21, 22 réalisées à partir d'un mélange homogène avec une teneur de 90 % en poids de tronçons de fibres de verre 4 et de 10 % en poids de premiers tronçons de fibres chimiques 7.

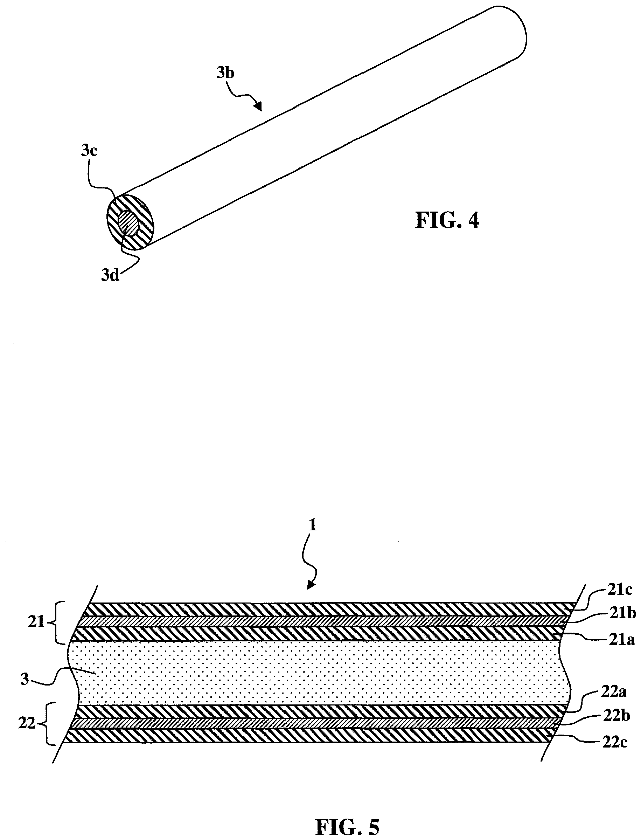

Les éléments de liaison basse température 3b de la couche centrale 3 peuvent être des tronçons de fibres comportant, au moins dans leur couche externe 3c (figure 4), un matériau thermofusible ayant une température de fusion inférieure à celle des tronçons de fibres frisés 3a de la couche centrale 3 et à celle des premiers tronçons de fibres chimiques 7 des couches externes 21 et 22.

Dans l'état représenté sur la figure 1, l'armature textile 1 ne présente aucune cohésion ni liaison sûre qui autorise son transport.

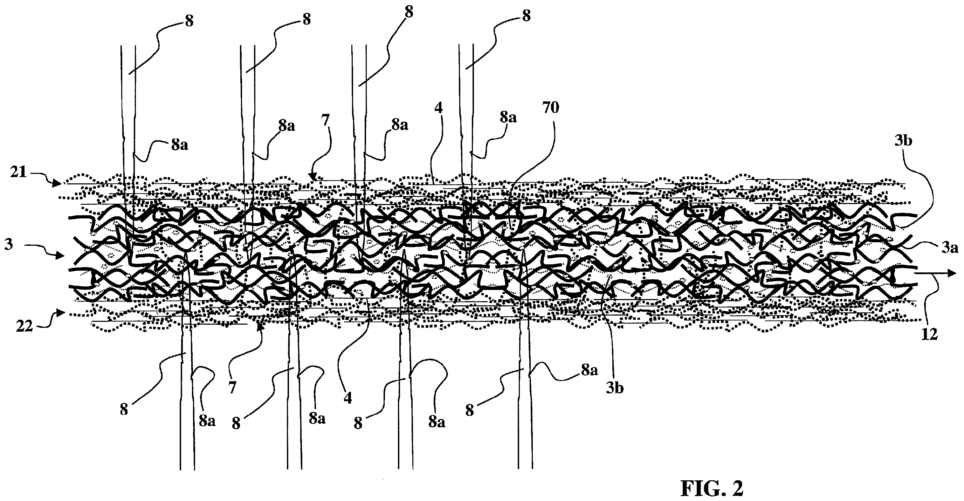

Une fois munie de ses trois couches textiles 21, 3 et 22, l'armature textile 1 subit un traitement d'aiguilletage illustré sur la figure 2. Au cours de cette opération d'aiguilletage, des aiguilles 8 font pénétrer des parties de tronçon pénétrantes 70 de certains au moins des premiers tronçons de fibres chimiques 7 de chaque couche textile externe 21 et 22 dans la couche centrale 3. Le sens de déplacement de l'armature textile 1 est indiqué par la flèche 12, et le sens de déplacement des aiguilles 8 est perpendiculaire à cette direction 12 et à la surface de l'armature textile 1.

Les aiguilles 8 utilisées ont des barbes 8a de dimensions adaptées pour entraîner préférentiellement les premiers tronçons de fibres chimiques 7, en évitant d'entraîner les tronçons de fibres de renfort 4 des couches textiles externes 21 et 22. En pratique, les premiers tronçons de fibres chimiques 7 ont un diamètre plus faible que les tronçons de fibres de renfort 4. On utilise par exemple des premiers tronçons de fibres chimiques 7 d'environ 1 à 15 dTex, et des tronçons de fibres de renfort 4 d'environ 40 Tex minimum.

Il est entendu que les épaisseurs et dimensions des traits représentant les tronçons de fibres 3a, 3b, 4 et 7 sur les figures 1 à 3 ne sont pas représentatives des épaisseurs et dimensions réelles des tronçons de fibres 3a, 3b, 4 et 7. Les épaisseurs et dimensions utilisées sur les figures 1 à 3 n'ont pour but que de faciliter la compréhension du lecteur pour la distinction des différentes fibres 3a, 3b, 4 et 7 des couches textiles 21, 3 et 22.

Selon une première possibilité, l'aiguilletage est choisi suffisant pour assurer la cohésion définitive de l'armature textile 1, de façon que celle-ci soit transportable en sortie de l'aiguilleteuse pour un usage comme produit de renfort.

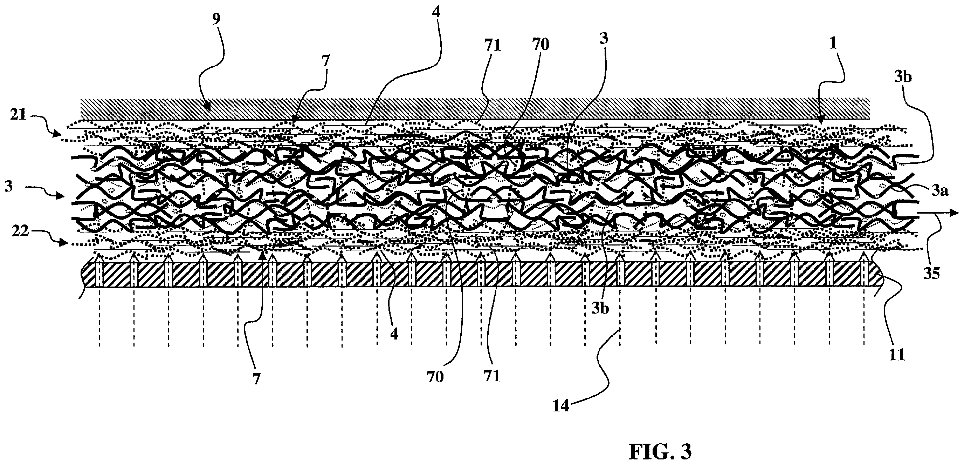

Selon une seconde possibilité, après l'opération d'aiguilletage illustrée sur la figure 2, l'armature textile 1 est soumise à un échauffement approprié (figure 3). Lors de cette étape d'échauffement, la couche superficielle thermofusible 3c des éléments de liaison basse température 3b de la couche centrale 3 est ramollie et rend adhérents les éléments de liaison basse température 3b. Les parties de tronçon pénétrantes 70 des premiers tronçons de fibres chimiques 7 qui ont été entraînées par les aiguilles 8 d'aiguilletage adhèrent alors, après refroidissement, aux éléments de liaison basse température 3b de la couche centrale 3. Après refroidissement, les différentes couches textiles 21, 3 et 22 de l'armature textile 1 sont ainsi liées entre elles par les parties de tronçons pénétrantes 70 collées des premiers tronçons de fibres chimiques 7. L'armature textile 1 est alors transportable même si l'aiguilletage est plus léger. L'adhésion des premiers tronçons de fibres chimiques 7 aux éléments de liaison basse température 3b au moins en partie thermofusibles de la couche centrale 3 permet de compenser l'insuffisance de l'aiguilletage seul pour assurer la cohésion de l'armature textile 1 afin de la rendre transportable.

Selon un mode de réalisation avantageux de l'invention, les tronçons de fibres frisés 3a de la couche centrale 3 peuvent être en polypropylène. Le polypropylène est en effet facilement filable et aisé à mettre en forme pour la réalisation de tronçons de fibres à frisure permanente élastique. On peut également utiliser des tronçons de fibres 3a en polyester ou en polyamide.

Dans un mode de réalisation de l'invention, les éléments de liaison basse température 3b de la couche centrale 3 sont en polyéthylène. On peut plus avantageusement utiliser des premiers tronçons de fibres chimiques basse température 3b thermofusibles en copolyester ou en copolyamide, ayant une température de fusion inférieure à celle des premiers tronçons de fibres chimiques 7 des couches externes 21 et 22 et à celle des tronçons de fibres frisés 3a de la couche centrale 3.

L'utilisation de tels matériaux est avantageuse du fait de leur basse température de fusion.

Le chauffage est contrôlé et réglé pour ramollir et rendre adhésifs les seuls éléments de liaison basse température 3b thermofusibles, mais sans les fondre. On évite ainsi la formation de zones imperméables à la résine dans la couche centrale 3 de l'armature textile 1. De telles zones imperméables nuiraient en effet à une bonne imprégnation de l'armature textile 1 par la résine lors d'une étape ultérieure de moulage à la presse, moulage par injection ou moulage sous vide.

A l'issue d'un tel échauffement contrôlé à température inférieure aux températures de fusion des tronçons de fibres frisés 3a et des premiers tronçons de fibres chimiques 7, les tronçons de fibres frisés 3a en polypropylène, polyester ou polyamide de la couche centrale 3, et les premiers tronçons de fibres chimiques 7 des couches externes 21 et 22, sont peu, voire aucunement détériorés par l'opération d'échauffement ou de formage ultérieure, conservent alors toutes leurs caractéristiques physiques et techniques, et conservent leur indépendance pour garantir la capacité de déformation ou de perméabilité de l'armature 1. En revanche, les éléments de liaison basse température 3b de la couche centrale 3 sont ramollis par l'échauffement.

Selon un autre mode de réalisation avantageux de l'invention, pour éviter tout risque de formation de zones peu perméables à la résine, on peut utiliser, comme éléments de liaison basse température 3b de la couche centrale 3, des fibres thermofusibles bi-composant telles qu'illustrées sur la figure 4, ayant une âme centrale 3d et une gaine externe 3c, la température de fusion de l'âme centrale 3d étant supérieure à celle de la gaine externe 3c.

Les tronçons de fibres chimiques basse température 3b bi-composant peuvent comporter une âme centrale 3d en polyamide ou polyester ou polypropylène, et une gaine externe 3c en copolyester, en polyéthylène, ou en toute autre matière ayant une température de fusion inférieure à celle des tronçons de fibres frisés 3a de la couche centrale 3 et à celle des premiers tronçons de fibres chimiques 7 des couches externes 21 et 22. En particulier, de bons résultats ont été obtenus en utilisant une âme centrale 3d en polyester et une gaine externe 3c en copolyester, ou une âme centrale 3d en polyamide et une gaine externe 3c en copolyamide. D'autres couples de matières peuvent être utilisés sous forme de fibres bi-composant coaxiales : le polypropylène et le copolypropylène ; le polypropylène et l'acétate d'éthylevinyle.

Par le fait que l'âme centrale 3d a une température de fusion plus élevée que la gaine externe 3c, on évite un risque accidentel de fusion complète des premiers tronçons de fibres chimiques basse température 3b thermofusibles de la couche centrale 3 lors de la fabrication de l'armature textile 1.

On limite aussi efficacement le risque, lors de l'étape d'échauffement, que les tronçons de fibres chimiques basse température 3b thermofusibles soient, par un échauffement trop élevé ou mal contrôlé, complètement fondus, formant des zones imperméables à la résine par étalement de leur matière constitutive dans la couche centrale 3 de l'armature textile 1. L'âme 3d des fibres bi-composant n'est pas (ou très peu) altérée. Les couches textiles externes 21 et 22 ne sont pas dégradées non plus.

En outre, l'utilisation de tronçons de fibres chimiques basse température 3b thermofusibles bi-composant à gaine externe 3c et âme centrale 3d permet de réduire la teneur en polyoléfine de l'armature textile 1. Ceci s'avère avantageux, la résine étant peu compatible avec les polyoléfines. En effet, la résine accroche mal sur des fibres en polyoléfine.

Dans un second mode de réalisation, illustré sur la figure 5, une armature textile 1 selon l'invention comporte à nouveau trois couches textiles 21, 3 et 22 successives. La couche centrale 3 a la même structure que la couche centrale 3 du mode de réalisation de la figure 1 précédemment décrit.

Dans ce second mode de réalisation de la figure 5, la différence réside dans la structure des couches externes 21 et 22. Dans ce cas, les couches externes 21 et 22 sont des couches stratifiées, comprenant chacune une strate externe, respectivement 21c ou 22c, une strate interne, respectivement 21a ou 22a, et une strate intermédiaire respectivement 21b ou 22b.

Les strates externes 21c et 22c ainsi que les strates internes 21a et 22a sont essentiellement constituées de premiers tronçons de fibres chimiques telles que les fibres chimiques 7 du mode de réalisation de la figure 1.

Les strates intermédiaires 21b et 22b sont essentiellement constituées de fibres de renfort telles que les fibres de renfort 4 du mode de réalisation de la figure 1.

La structure stratifiée des couches externes 21 et 22 facilite leur réalisation, en ce sens qu'elle ne nécessite pas la préparation d'un mélange homogène de fibres chimiques et de fibres de renfort.

Selon une variante de ce second mode de réalisation, on peut omettre la présence d'une strate interne 21a, 22a.

Dans les modes de réalisation décrits ci-dessus, les éléments de liaison basse température 3b sont présents dans la seule couche centrale 3, les couches externes 21 et 22 étant dépourvues de tels éléments de liaison basse température et conservant ainsi toute leur flexibilité.

Toutefois, on peut avantageusement améliorer la cohésion de l'armature textile sans nuire sensiblement à sa flexibilité en ajoutant dans les couches externes une quantité limitée d'éléments de liaison basse température, cette quantité pouvant rester limitée grâce à la présence des éléments de liaison basse température 3b de la couche centrale 3. Ainsi, comme illustré sur la figure 1, on peut prévoir la présence de tronçons de fibres chimiques basse température 71 dans les couches externes 21 et 22.

Dans le cas préféré de couches externes 21 et 22 à structure stratifiée, les tronçons de fibres chimiques basse température 71 peuvent être présents dans les seules strates externes 21c et 22c, et en proportion de 8 % à 10 % en poids des tronçons de fibres chimiques 7 constituant les strates externes 21c et 22c.

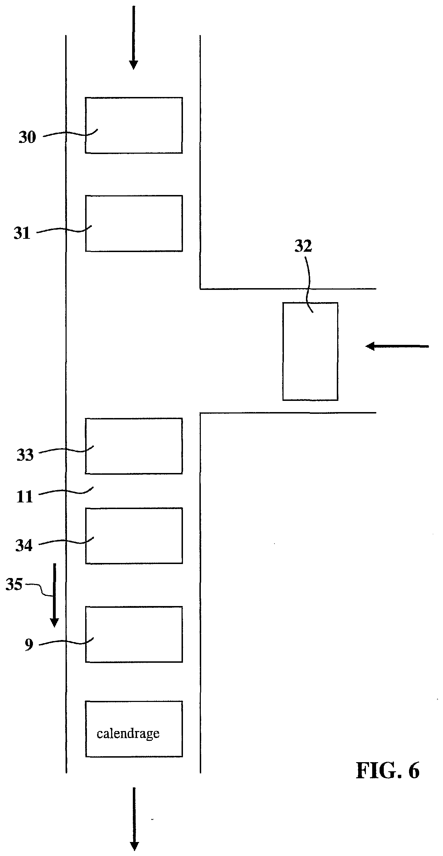

La figure 6 illustre la fabrication d'une armature selon la variante du second mode de réalisation de la figure 5 dépourvue de strates internes 21a, 22a. Une carde de tête 30 à deux étages réalise deux voiles parallèles de premiers tronçons de fibres chimiques destinés à constituer les strates externes 21c et 22c. Un premier coupeur de verre 31 dépose sur le voile inférieur les fibres de renfort destinées à constituer la première strate intermédiaire 21b. Une carde centrale 32 réalise la couche centrale 3 et la dépose sur la première strate intermédiaire 21b. Un second coupeur de verre 33 dépose sur la couche centrale 3 les fibres de renfort destinées à constituer la seconde strate intermédiaire 22b. Le voile supérieur est alors posé sur la seconde strate intermédiaire 22b avant l'entrée dans une aiguilleteuse 34.

Lors de l'aiguilletage, comme sur la figure 2, des parties de tronçon pénétrantes 70 des premiers tronçons de fibres chimiques 7 des couches externes 21 et 22 sont entraînées par les aiguilles et traversent les strates jusqu'à pénétrer dans la couche centrale 3, dans laquelle elles sont retenues au moins par frottement. L'échauffement ultérieur éventuel colle les parties de tronçon pénétrantes 70 des premiers tronçons de fibres chimiques 7 aux fibres chimiques basse température 3b de la couche centrale 3, et renforce la liaison des couches et strates.

Une armature textile 1 selon cette variante du second mode de réalisation de l'invention peut ainsi aisément être fabriquée à faible coût par un procédé comportant les étapes successives suivantes :
a) prévoir une couche centrale 3 contenant, en mélange, des tronçons de fibres frisés 3a monobrins en un premier matériau synthétique ayant reçu préalablement à leur mise sous forme de couche un traitement leur communiquant une frisure permanente, et des tronçons de fibres chimiques basse température 3b comportant au moins une couche superficielle 3c en un matériau thermofusible ayant une température de fusion inférieure à celle du premier matériau synthétique,
b) disposer, de part et d'autre de la couche centrale 3, une couche externe respectivement 21, 22 comportant des tronçons de fibres de renfort 4, et des premiers tronçons de fibres chimiques 7 ayant une frisure permanente et ayant une température de fusion supérieure à celle des tronçons de fibres chimiques basse température 3b de la couche centrale 3,
c) effectuer un aiguilletage (figure 2) pour faire pénétrer des parties de tronçon pénétrantes 70 des premiers tronçons de fibres chimiques 7 dans la couche centrale 3.

Un aiguilletage fort peut suffire pour assurer, par frottement entre les fibres, la cohérence des couches de l'armature textile 1.

En alternative, en présence d'un aiguilletage léger, on peut prévoir une étape ultérieure :
d) chauffer l'armature textile 1 (figure 3) pour ramollir au moins superficiellement et rendre adhérents lesdits tronçons de fibres chimiques basse température 3b de la couche centrale 3, et pour les faire adhérer aux parties pénétrantes 70 des premiers tronçons de fibres chimiques 7.

Après l'étape d) de chauffage de l'armature textile 1, on peut avantageusement effectuer une étape e) de calandrage à froid de l'armature textile 1 pour lui donner une épaisseur constante et homogène. Le calandrage favorise aussi le rapprochement et le collage des fibres entre elles.

Les premiers tronçons de fibres chimiques 7 des couches externes 21 et 22 peuvent avantageusement avoir un diamètre inférieur à celui des tronçons de fibres de renfort 4. L'aiguilletage de l'étape c) est alors effectué à l'aide des aiguilles 8 (figure 2) qui comportent des barbes 8a aptes à entraîner préférentiellement les premiers tronçons de fibres chimiques 7, mais inaptes à entraîner de façon sensible les tronçons de fibres de renfort 4 à diamètre plus gros.

Au cours de l'étape d) de chauffage, on fait passer l'armature textile 1 dans un four à air traversant 9 (figures 3 et 6). Le four à air traversant 9 comporte un tapis transporteur 11 qui déplace l'armature textile 1 à travers le four 9 dans le sens défini par la flèche 35. Le tapis transporteur 11 est ajouré. Des jets d'air chaud 14 sont ainsi envoyés à travers l'armature textile 1 pour l'échauffer selon toute son épaisseur afin de faire adhérer les premiers tronçons de fibres chimiques 7 des couches externes 21 et 22 aux tronçons de fibres chimiques basse température 3b au moins en partie thermofusibles de la couche centrale 3 .

Pour réaliser une armature textile 1 selon le premier mode de réalisation des figures 1 à 3, au cours de l'étape b), un mélange homogène de tronçons de premières fibres chimiques 7 et de tronçons de fibres de renfort 4 est obtenu au moyen d'un coupeur et déposé par gravité sur les deux faces de la couche centrale 3.

Pour réaliser une armature textile 1 selon le mode de réalisation de la figure 5, les strates 21a, 22a, 21c et 22c en premières fibres chimiques 7 sont réalisées chacune par cardage. Les strates internes 21a et 22a éventuelles sont disposées de part et d'autre de la couche centrale 3, puis les strates intermédiaires 21b et 22b en fibres de renfort 4 coupées par un coupeur sont déposées par gravité, puis les strates externes 21c et 22c sont disposées de part et d'autre de l'ensemble ainsi formé.

### Exemple 1

I) Sur une carde conventionnelle, on réalise une couche centrale 3 contenant en mélange 90 % en poids de tronçons de fibres frisés 3a monobrins en polyester de titre unitaire 90 dTex, et 10 % en poids de tronçons de fibres basse température 3b de titre unitaire 15 dTex formant des éléments de liaison.

Les tronçons de fibres frisés 3a monobrins ont une longueur de coupe de 90 mm environ, présentent une frisure de deux ondulations par centimètre environ et une température de fusion comprise entre 170°C et 180°C environ. Les tronçons de fibres basse température 3b sont des tronçons de fibres bi-composant distribuées par la société coréenne HUVIS sous la référence LOW MELT FIBER 15 DE X 51. Il s'agit de fibres ayant un titre unitaire de 15 dTex, ayant une âme centrale 3d en polyester, et ayant une gaine externe 3c en copolyester dont la température de fusion est de 110°C.

La couche centrale 3 présente une épaisseur moyenne comprise entre 4 et 5 mm environ et un poids de 200 grammes par mètre carré environ.
II) On dépose sur chaque face de la couche centrale 3 une strate interne respective 21a et 22a, constituée de tronçons de fibres chimiques 7 en polyester de titre unitaire 1.4 dTex et présentant une densité voisine de 25 g/m².
III) On dépose sur chaque strate interne 21a et 22a une strate intermédiaire respective 21b et 22b constituée de tronçons de fibres de renfort 4.

Les tronçons de fibres de renfort 4 sont des tronçons de fibres de verre 4 ayant un titre unitaire d'environ 50 Tex et une longueur de coupe d'environ 50 mm.

Le diamètre des fibres élémentaires des tronçons de fibres de verre 4 est d'environ 14 microns.

Les strates intermédiaires 21b et 22b ont une densité voisine de 450 g/m².
IV) On dépose sur chaque strate intermédiaire 21b et 22b une strate externe respective 21c et 22c de composition identique à celle des strates internes 21a et 22a.
V) L'armature textile 1 est introduite au moyen d'un tapis transporteur 11 dans une aiguilleteuse à cylindres 34. L'écartement des cylindres est de 20 mm et la profondeur de pénétration des aiguilles est de 8 mm. La vitesse de défilement du tapis transporteur 11 est de 18 mètres par minute. L'aiguilletage réalise de 40 à 45 trous au centimètre carré.

L'armature ainsi réalisée est appropriée pour constituer une préforme après thermoformage.

### Exemple 2

Les étapes I à IV sont les mêmes que dans l'exemple 1.

Au cours de l'étape V, on réduit quelque peu l'aiguilletage, avec une densité de 35 trous au centimètre carré, et avec une pénétration de 7.5 mm.
VI) Après l'opération d'aiguilletage, l'armature textile 1 est introduite dans un four à air traversant 9 comportant une partie chauffante de 18 mètres de longueur et une vitesse de défilement de 18 mètres par minute. La température du four à air traversant 9 est de 110°C à 120°C, réalisant un chauffage pendant une minute environ.
VII) En sortie du four à air traversant 9, on procède à un calandrage à froid qui donne à l'armature textile 1 son épaisseur finale qui est voisine de 4 à 5 mm environ.

### Exemple 3

L'exemple 3 est presque identique à l'exemple 2.

La différence réside dans la composition de la couche centrale 3 : 48 % en poids de tronçons de fibres frisés 3a monobrins en polyester de titre unitaire 90 dTex, 48 % en poids de tronçons de fibres frisés 3a monobrins en polyester de titre unitaire 60 dTex, et 4 % en poids de tronçons de fibres basse température 3b de titre unitaire 15 dTex.

Les étapes Il à VII sont les mêmes que dans l'exemple 2.

### Exemple 4

L'exemple 4 est presque identique à l'exemple 2.

La différence réside dans la composition de la couche centrale 3 : 45 % en poids de tronçons de fibres frisés 3a monobrins en polyester de titre unitaire 90 dTex, 45 % en poids de tronçons de fibres frisés 3a monobrins en polyester de titre unitaire 60 dTex, et 10 % en poids de tronçons de fibres basse température 3b de titre unitaire 15 dTex.

### Exemple 5

L'exemple 5 est presque identique à l'exemple 1.

La différence réside dans la composition des strates intermédiaires 21 b et 22 b et des strates externes 21c et 22c : dans cet exemple 5 ces strates contiennent 8% en poids de fibres en matériau thermofusible basse température LOW MELT FIBER 15 DE X 51 identiques aux fibres basse température 3b de la couche centrale 3.

### Exemple 6

L'exemple 6 est presque identique à l'exemple 2.

La différence réside dans la composition des strates intermédiaires 21 b et 22 b et des strates externes 21c et 22c : dans cet exemple 6 ces strates contiennent 8% en poids de fibres en matériau thermofusible basse température LOW MELT FIBER 15 DE X 51 identiques aux fibres basse température 3b de la couche centrale 3.

La présente invention n'est pas limitée aux modes de réalisation qui ont été explicitement décrits, mais elle en inclut les diverses variantes et généralisations contenues dans le domaine des revendications ci-après.

## Revendications

1. Armature textile (1) utilisable pour la réalisation de matériaux ou pièces composites, comprenant :
- une couche centrale (3) à base de tronçons de fibres frisés (3a) en un premier matériau synthétique, ayant une frisure permanente,
- des couches externes (21, 22) disposées de part et d'autre de la couche centrale (3),
dans laquelle :
- les couches externes (21, 22) comportent des premiers tronçons de fibres chimiques (7) ayant une frisure permanente, et des tronçons de fibres de renfort (4),
- certains au moins des premiers tronçons de fibres chimiques (7) des couches externes (21, 22), répartis selon toute la surface des couches externes (21, 22), comportent des parties de tronçon pénétrantes (70) qui pénètrent dans la couche centrale (3),
**caractérisée en ce que** :
- dans les couches externes (21, 22), plus de 80% en poids des premiers tronçons de fibres chimiques (7) ont une frisure permanente et sont constitués d'un second matériau synthétique,
- la couche centrale (3) comprend en outre des éléments de liaison basse température (3b) comportant au moins une couche superficielle (3c) en un matériau thermofusible ayant une température de fusion inférieure à celle des tronçons de fibres de renfort (4), à celle du second matériau synthétique des premiers tronçons de fibres chimiques, et à celle du premier matériau synthétique des tronçons de fibres frisés (3a),
- les premiers tronçons de fibres chimiques (7) en second matériau synthétique n'adhèrent pas entre eux dans les couches externes (21, 22),
- les parties de tronçon pénétrantes (70) des premiers tronçons de fibres chimiques (7) qui pénètrent dans la couche centrale (3) sont retenues dans ladite couche centrale (3) et assurent ainsi la cohésion entre les couches (3, 21, 22) de l'armature textile (1).

2. Armature textile (1) selon la revendication 1, **caractérisée en ce que** les tronçons de fibres frisés (3a) en premier matériau synthétique dans la couche centrale (3) sont des tronçons de fibres frisés monobrins en premier matériau synthétique de la famille constituée de polypropylène, de polyester et de polyamide.

3. Armature textile (1) selon l'une des revendications 1 ou 2, **caractérisée en ce que** les tronçons de fibres frisés (3a) en premier matériau synthétique dans la couche centrale (3) présentent au moins deux titres unitaires différents.

4. Armature textile (1) selon l'une quelconque des revendications 1 à 3, **caractérisée en ce que** les premiers tronçons de fibres chimiques (7) des couches externes (21, 22) ont une section transversale de diamètre inférieur à celui des tronçons de fibres de renfort (4).

5. Armature textile (1) selon l'une quelconque des revendications 1 à 4, **caractérisée en ce que** les éléments de liaison basse température (3b) de la couche centrale (3) sont des tronçons de fibres en une matière thermofusible à température de fusion inférieure à celle du second matériau synthétique des premiers tronçons de fibres chimiques (7) des couches externes (21, 22) et à celle du premier matériau synthétique des tronçons de fibres frisés (3a).

6. Armature textile (1) selon l'une quelconque des revendications 1 à 4, **caractérisée en ce que** :
- les éléments de liaison basse température (3b) de la couche centrale (3) sont des tronçons de fibres bi-composant, ayant une âme centrale (3d) en un premier composant et une gaine externe (3c) en un second composant,
- la température de fusion du premier composant de l'âme centrale (3d) est supérieure à celle du second composant de la gaine externe (3c),
- la température de fusion du second composant de la gaine externe (3c) est inférieure à celle des premiers tronçons de fibres chimiques (7) des couches externes (21, 22) et à celle du premier matériau synthétique des tronçons de fibres frisés (3a).

7. Armature textile (1) selon la revendication 6, **caractérisée en ce que** l'âme centrale (3d) est en polyamide ou en polyester ou en polypropylène.

8. Armature textile (1) selon l'une quelconque des revendications 1 à 4, **caractérisée en ce que**, dans la couche centrale (3), les éléments de liaison basse température sont sous la forme de poudre basse température mélangée aux tronçons de fibres frisés (3a).

9. Armature textile (1) selon l'une quelconque des revendications 1 à 4, **caractérisée en ce que**, dans la couche centrale (3), les éléments de liaison basse température sont sous la forme d'un voile, d'un film, d'une grille ou d'un filet en fibres basse température, entourés de fibres frisées (3a).

10. Armature textile selon l'une quelconque des revendications 1 à 9, **caractérisée en ce que** les couches externes (21, 22) sont sous forme stratifiée, comprenant une strate externe (21c, 22c) essentiellement en premiers tronçons de fibres chimiques (7), avec ou sans une strate interne (21a, 22a) essentiellement en premiers tronçons de fibres chimiques (7), et avec une strate intermédiaire (21b, 22b) essentiellement en fibres de renfort (4).

11. Armature textile selon l'une quelconque des revendications 1 à 10 **caractérisée en ce que**, dans les couches externes (21, 22), les tronçons de fibres chimiques (7) comprennent 100% en poids de fibres à frisure permanente en second matériau synthétique.

12. Armature textile selon l'une quelconque des revendications 1 à 10 **caractérisée en ce que**, dans les couches externes (21, 22), les tronçons de fibres chimiques (7) comprennent 8 à 10% en poids de fibres en matériau thermofusible basse température (71).

13. Procédé de fabrication d'une armature textile (1) utilisable pour la réalisation de matériaux ou pièces composites, **caractérisé en ce qu'**il comporte les étapes successives suivantes :
a) prévoir une couche centrale (3) contenant, en mélange, des tronçons de fibres frisés monobrins (3a) en un premier matériau synthétique ayant reçu préalablement à leur mise sous forme de couche un traitement leur communiquant une frisure permanente, et des éléments de liaison basse température (3b) comportant au moins une couche superficielle (3c) en un matériau thermofusible ayant une température de fusion inférieure à celle du premier matériau synthétique,
b) disposer, de part et d'autre de la couche centrale (3), une couche externe (21, 22) comportant des tronçons de fibres de renfort (4), et des premiers tronçons de fibres chimiques (7) dont plus de 80% en poids ont une frisure permanente et une température de fusion supérieure à celle des éléments de liaison basse température (3b) de la couche centrale (3),
c) effectuer un aiguilletage pour faire pénétrer, selon une partie pénétrante (70) de leur longueur, des premiers tronçons de fibres chimiques (7) dans la couche centrale (3).

14. Procédé selon la revendication 13, **caractérisé en ce que** l'aiguilletage est choisi suffisant pour que les parties pénétrantes (70) des premiers tronçons de fibres chimiques (7) assurent, par frottement, une cohésion satisfaisante des couches centrale (3) et externes (21, 22) de l'armature textile (1).

15. Procédé selon la revendication 13, **caractérisé en ce qu'**il comprend l'étape ultérieure :
d) chauffer l'armature textile (1) pour ramollir au moins superficiellement et rendre adhérents lesdits éléments de liaison basse température (3b) de la couche centrale (3) et les faire adhérer aux parties pénétrantes (70) des premiers tronçons de fibres chimiques (7).

16. Procédé selon la revendication 15, **caractérisé en ce qu'**il comporte en outre, après l'étape d), une étape e) au cours de laquelle on effectue un calandrage à froid de l'armature textile (1).

17. Procédé selon l'une quelconque des revendications 13 à 16, **caractérisé en ce que** :
- les premiers tronçons de fibres chimiques (7) des couches externes (21, 22) ont un diamètre inférieur à celui des tronçons de fibres de renfort (4),
- l'aiguilletage de l'étape c) est effectué à l'aide d'aiguilles (8) qui comportent des barbes (8a) aptes à entraîner préférentiellement les premiers tronçons de fibres chimiques (7), mais inaptes à entraîner de façon sensible les tronçons de fibres de renfort (4) à diamètre plus gros.

## Patentansprüche

1. Textilverstärkung (1), verwendbar zur Herstellung von Kompositmaterialien oder -teilen, aufweisend:
- eine zentrale Schicht (3) basierend auf gekräuselten Faserabschnitten (3a) aus einem ersten synthetischen Material, das eine permanente Kräuselung aufweist,
- äußere Schichten (21, 22), die beidseitig der zentralen Schicht (3) angeordnet sind,
wobei:
- die äußeren Schichten (21, 22) erste Chemiefaserabschnitte (7), die eine permanente Kräuselung aufweisen, und Verstärkungsfaserabschnitte (4) umfassen,
- zumindest einige der ersten Chemiefaserabschnitte (7) der äußeren Schichten (21, 22), die entlang der gesamten Oberfläche der äußeren Schichten (21, 22) verteilt sind, Teilstücke von Eindringabschnitten (70) umfassen, die in die zentrale Schicht (3) eindringen,
**dadurch gekennzeichnet, dass**:
- innerhalb der äußeren Schichten (21, 22) mehr als 80 Gew.-% der ersten Chemiefaserabschnitte (7) eine permanente Kräuselung aufweisen und aus einem zweiten synthetischen Material gebildet sind,
- die zentrale Schicht (3) zusätzlich Niedrigtemperatur-Verbindungselemente (3b) umfasst, mit mindestens einer Oberflächenschicht (3c) aus einem heißschmelzbaren Material, das eine niedrigere Schmelztemperatur als die der Verstärkungsfaserabschnitte (4), als die des zweiten synthetischen Materials der ersten Chemiefaserabschnitte, und als die des ersten synthetischen Materials der gekräuselten Faserabschnitte (3a) aufweist,
- die ersten Chemiefaserabschnitte (7) aus dem zweiten synthetischen Material in den äußeren Schichten (21, 22) nicht aneinander haften,
- die Teilstücke von Eindringabschnitten (70) der ersten Chemiefaserabschnitte (7), die in die zentrale Schicht (3) eindringen, in dieser zentralen Schicht (3) zurückgehalten werden und derart den Zusammenhalt zwischen den Schichten (3, 21, 22) der Textilverstärkung (1) sicherstellen.

2. Textilverstärkung (1) nach Anspruch 1, **dadurch gekennzeichnet, dass** die gekräuselten Faserabschnitte (3a) aus dem ersten synthetischen Material in der zentralen Schicht (3) einfaserige gekräuselte Faserabschnitte aus dem ersten synthetischen Material sind, aus der Familie umfassend Polypropylen, Polyester und Polyamid.

3. Textilverstärkung (1) nach einem der Ansprüche 1 oder 2, **dadurch gekennzeichnet, dass** die gekräuselten Faserabschnitte (3a) aus dem ersten synthetischen Material in der zentralen Schicht (3) mindestens zwei verschiedene Einzeltitulierungen aufweisen.

4. Textilverstärkung (1) nach einem der Ansprüche 1 bis 3, **dadurch gekennzeichnet, dass** die ersten Chemiefaserabschnitte (7) der äußeren Schichten (21, 22) eine Querschnittsfläche mit einem geringeren Durchmesser als dem der Verstärkungsfaserabschnitte (4) aufweisen.

5. Textilverstärkung (1) nach einem der Ansprüche 1 bis 4, **dadurch gekennzeichnet, dass** die Niedrigtemperatur-Verbindungselemente (3b) der zentralen Schicht (3) Faserabschnitte aus einem heißschmelzbaren Material sind, mit einer niedrigeren Schmelztemperatur als die des zweiten synthetischen Materials der ersten Chemiefaserabschnitte (7) der äußeren Schichten (21, 22) und als die des ersten synthetischen Materials der gekräuselten Faserabschnitte (3a).

6. Textilverstärkung (1) nach einem der Ansprüche 1 bis 4, **dadurch gekennzeichnet, dass**:
- Niedrigtemperatur-Verbindungselemente (3b) der zentralen Schicht (3) Zweikomponenten-Faserabschnitte sind, die einen Zentralkern (3d) aus einer ersten Komponente und eine äußere Ummantelung (3c) aus einer zweiten Komponente aufweisen,
- die Schmelztemperatur der ersten Komponente des Zentralkerns (3d) höher ist, als die der zweiten Komponente der äußeren Ummantelung (3c),
- die Schmelztemperatur der zweiten Komponente der äußeren Ummantelung (3c) niedriger ist, als die der ersten Chemiefaserabschnitte (7) der äußeren Schichten (21, 22) und als die des ersten synthetischen Materials der gekräuselten Faserabschnitte (3a).

7. Textilverstärkung (1) nach Anspruch 6, **dadurch gekennzeichnet, dass** der Zentralkern (3d) aus Polyamid oder aus Polyester oder aus Polypropylen ist.

8. Textilverstärkung (1) nach einem der Ansprüche 1 bis 4, **dadurch gekennzeichnet, dass** in der zentralen Schicht (3), die Niedrigtemperatur-Verbindungselemente in der Form von Niedrigtemperatur-Pulver vorliegen, das mit den gekräuselten Faserabschnitten (3a) vermischt ist.

9. Textilverstärkung (1) nach einem der Ansprüche 1 bis 4, **dadurch gekennzeichnet, dass** in der zentralen Schicht (3) die Niedrigtemperatur-Verbindungselemente in der Form eines Voile, eines Films, eines Gitters oder eines Netzes aus Niedrigtemperaturfasern, umgeben von den gekräuselten Fasern (3a).

10. Textilverstärkung nach einem der Ansprüche 1 bis 9, **dadurch gekennzeichnet, dass** die äußeren Schichten (21, 22) in vielschichtiger Form vorliegen und eine außenliegende Schicht (21c, 22c) umfassen, im Wesentlichen aus ersten Chemiefaserabschnitten (7), mit oder ohne einer innenliegenden Schicht (21a, 21c), im Wesentlichen aus ersten Chemiefaserabschnitten (7) und mit einer Zwischenschicht (21b, 22b), im Wesentlichen aus Verstärkungsfasern (4).

11. Textilverstärkung nach einem der Ansprüche 1 bis 10, **dadurch gekennzeichnet, dass** in den äußeren Schichten (21, 22) die Chemiefaserabschnitte (7) 100 Gew.-% an permanent gekräuselten Fasern aus dem zweiten synthetischen Material umfassen.

12. Textilverstärkung nach einem der Ansprüche 1 bis 10, **dadurch gekennzeichnet, dass** in den äußeren Schichten (21, 22) die Chemiefaserabschnitte (7) 8 bis 10 Gew.-% der Fasern aus einem heißschmelzbaren Niedrigtemperatur-Material (71) gebildet sind.

13. Verfahren zur Herstellung einer Textilverstärkung (1) verwendbar zur Herstellung von Kompositmaterialien oder -teilen, **dadurch gekennzeichnet, dass** das Verfahren die nachfolgenden, aufeinanderfolgenden Schritte umfasst:
a) Bereitstellen einer zentralen Schicht (3), die in Mischung enthält, einfaserige, gekräuselte Faserabschnitte (3a) aus einem ersten synthetischen Material, die vor dem Unformen zu der Schicht, einer Behandlung unterzogen wurden, die diesen eine permanente Kräuselung verleiht, und Niedrigtemperatur-Verbindungselemente (3b), mit mindestens einer Oberflächenschicht (3c) aus einem heißschmelzbaren Material, das eine niedrigere Schmelztemperatur als die des ersten synthetischen Materials aufweist,
b) Aufbringen, beidseitig der zentralen Schicht (3), eine äußere Schicht (21, 22), mit Verstärkungsfaserabschnitten (4), und ersten Chemiefaserabschnitten (7), von denen mehr als 80 Gew-% eine permanente Kräuselung aufweisen und eine Schmelztemperatur, höher als die der Niedrigtemperatur-Verbindungselemente (3b) der zentralen Schicht (3),
c) Durchführen einer Benadelung, damit die ersten Chemiefaserabschnitte (7) entlang eines Eindringabschnitts (70) bezüglich ihrer Länge in die zentrale Schicht (3) eindringen.

14. Verfahren nach Anspruch 13, **dadurch gekennzeichnet, dass** die Benadelung derart ausreichend gewählt wird, damit die Eindringabschnitte (70) der ersten Chemiefaserabschnitte (7) aufgrund von Reibung einen zufriedenstellenden Zusammenhalt der zentralen Schicht (3) und der äußeren Schichten (21, 22) der Textilverstärkung (1) sicherstellen.

15. Verfahren nach Anspruch 13, **dadurch gekennzeichnet, dass** das Verfahren den nachträglichen Schritt aufweist:
d) Erwärmen der Textilverstärkung (1), um diese zumindest oberflächlich zu erweichen und die Niedrigtemperatur-Verbindungselemente (3b) der zentralen Schicht (3) zusammenhaltend auszugestalten und diese mit den Eindringabschnitten (70) der ersten Chemiefaserabschnitte (7) zu verbinden.

16. Verfahren nach Anspruch 15, **dadurch gekennzeichnet, dass** dieses einen weiteren, auf den Schritt d) folgenden Schritt e) umfasst, im Verlauf dessen eine Kaltkalandrierung der Textilverstärkung (1) durchgeführt wird.

17. Verfahren nach einem der Ansprüche 13 bis 16, **dadurch gekennzeichnet, dass**:
- die ersten Chemiefaserabschnitte (7) der äußeren Schichten (21, 22) einen geringeren Durchmesser als die Verstärkungsfaserabschnitte (4) aufweisen,
- die Benadelung des Schritts c) unter Zuhilfenahme von Nadeln (8) durchgeführt wird, die Widerhaken (8a) umfassen, die ausgebildet sind, vorzugsweise auf die ersten Chemiefaserabschnitte (7) einzuwirken, jedoch nicht ausgebildet, in spürbarer Art auf die Verstärkungsfaserabschnitte (4) mit dem größeren Durchmesser, einzuwirken.

## Claims

1. A textile reinforcement (1) that can be used for the production of composite materials or parts, comprising:
- a central layer (3) based on segments of crimped fibers (3a) made of a first synthetic material, having a permanent crimp,
- outer layers (21, 22) positioned on either side of the central layer (3),
wherein:
- the outer layers (21, 22) comprise first segments of chemical fibers (7) having a permanent crimp, and segments of reinforcing fibers (4),
- at least some of the first segments of chemical fibers (7) of the outer layers (21, 22), distributed over the entire surface of the outer layers (21, 22), comprise penetrating segment portions (70) that penetrate into the central layer (3),
**characterized in that**:
- in the outer layers (21, 22), more than 80% by weight of the first segments of chemical fibers (7) have a permanent crimp and consist of a second synthetic material,
- the central layer (3) also comprises low-temperature binding elements (3b) comprising at least one surface layer (3c) made of a hot-melt material having a melting point lower than that of the segments of reinforcing fibers (4), lower than that of the second synthetic material of the first segments of chemical fibers, and lower than that of the first synthetic material of the segments of crimped fibers (3a),
- the first segments of chemical fibers (7) made of a second synthetic material do not adhere to one another in the outer layers (21, 22),
- the penetrating segment portions (70) of the first segments of chemical fibers (7) that penetrate into the central layer (3) are retained in said central layer (3) and thus provide the cohesion between the layers (3, 21, 22) of the textile reinforcement (1).

2. The textile reinforcement (1) as claimed in claim 1, **characterized in that** the segments of crimped fibers (3a) made of a first synthetic material in the central layer (3) are segments of monofilament crimped fibers made of a first synthetic material from the family consisting of polypropylene, polyester and polyamide.

3. The textile reinforcement (1) as claimed in either of claims 1 and 2, **characterized in that** the segments of crimped fibers (3a) made of a first synthetic material in the central layer (3) have at least two different unit linear densities.

4. The textile reinforcement (1) as claimed in any one of claims 1 to 3, **characterized in that** the first segments of chemical fibers (7) of the outer layers (21, 22) have a cross section with a diameter smaller than that of the segments of reinforcing fibers (4).

5. The textile reinforcement (1) as claimed in any one of claims 1 to 4, **characterized in that** the low-temperature binding elements (3b) of the central layer (3) are segments of fibers made of a hot-melt material having a melting point lower than that of the second synthetic material of the first segments of chemical fibers (7) of the outer layers (21, 22) and lower than that of the first synthetic material of the segments of crimped fibers (3a).

6. The textile reinforcement (1) as claimed in any one of claims 1 to 4, **characterized in that**:
- the low-temperature binding elements (3b) of the central layer (3) are segments of bicomponent fibers, having a central core (3d) made of a first component and an outer sheath (3c) made of a second component,
- the melting point of the first component of the central core (3d) is higher than that of the second component of the outer sheath (3c),
- the melting point of the second component of the outer sheath (3c) is lower than that of the first segments of chemical fibers (7) of the outer layers (21, 22) and lower than that of the first synthetic material of the segments of crimped fibers (3a).

7. The textile reinforcement (1) as claimed in claim 6, **characterized in that** the central core (3d) is made of polyamide or polyester or polypropylene.

8. The textile reinforcement (1) as claimed in any one of claims 1 to 4, **characterized in that**, in the central layer (3), the low-temperature binding elements are in the form of a low-temperature powder mixed with the segments of crimped fibers (3a).

9. The textile reinforcement (1) as claimed in any one of claims 1 to 4, **characterized in that**, in the central layer (3), the low-temperature binding elements are in the form of a web, a film, a grid or a net made of low-temperature fibers, surrounded by crimped fibers (3a).

10. The textile reinforcement as claimed in any one of claims 1 to 9, **characterized in that** the outer layers (21, 22) are stratified, comprising an outer stratum (21c, 22c) essentially made of first segments of chemical fibers (7), with or without an inner stratum (21a, 22a) essentially made of first segments of chemical fibers (7), and with an intermediate stratum (21b, 22b) essentially made of reinforcing fibers (4).

11. The textile reinforcement as claimed in any one of claims 1 to 10, **characterized in that**, in the outer layers (21, 22), the segments of chemical fibers (7) comprise 100% by weight of fibers having a permanent crimp made of a second synthetic material.

12. The textile reinforcement as claimed in any one of claims 1 to 10, **characterized in that**, in the outer layers (21, 22), the segments of chemical fibers (7) comprise 8% to 10% by weight of fibers made of low-temperature hot-melt material (71).

13. A process for manufacturing a textile reinforcement (1) that can be used for the production of composite materials or parts, **characterized in that** it comprises the following successive steps:
a) providing a central layer (3) containing, as a mixture, segments of monofilament crimped fibers (3a) made of a first synthetic material that have received, before their formation into a layer, a treatment that gives them a permanent crimp, and low-temperature binding elements (3b) comprising at least one surface layer (3c) made of a hot-melt material having a melting point lower than that of the first synthetic material,
b) positioning, on either side of the central layer (3), an outer layer (21, 22) comprising segments of reinforcing fibers (4), and first segments of chemical fibers (7), of which more than 80% by weight have a permanent crimp and a melting point higher than that of the low-temperature binding elements (3b) of the central layer (3),
c) carrying out needle punching in order to make first segments of chemical fibers (7) penetrate, over a penetrating portion (70) of their length, into the central layer (3).

14. The process as claimed in claim 13, **characterized in that** the needle punching is selected to be sufficient for the penetrating portions (70) of the first segments of chemical fibers (7) to ensure, by friction, a satisfactory cohesion of the central (3) and outer (21, 22) layers of the textile reinforcement (1).

15. The process as claimed in claim 13, **characterized in that** it comprises the subsequent step of:
d) heating the textile reinforcement (1) in order to at least superficially soften and make adherent said low-temperature binding elements (3b) of the central layer (3) and make them adhere to the penetrating portions (70) of the first segments of chemical fibers (7).

16. The process as claimed in claim 15, **characterized in that** it also comprises, after step d), a step e) during which the textile reinforcement (1) is cold-rolled.

17. The process as claimed in any one of claims 13 to 16, **characterized in that**:
- the first segments of chemical fibers (7) of the outer layers (21, 22) have a diameter smaller than that of the segments of reinforcing fibers (4),
- the needle punching of step c) is carried out using needles (8) that comprise barbs (8a) capable of preferentially entraining the first segments of chemical fibers (7), but incapable of significantly entraining the segments of reinforcing fibers (4) of larger diameter.
